# EUROPEAN PATENT SPECIFICATION

(11) **EP 1 129 931 B1**
(45) Date of publication and mention of the grant of the patent: **03.05.2006**
(21) Application number: 01104362.7
(22) Date of filing: 23.02.2001
(51) Int. Cl.: B62K 11/14, H01H 9/06, B62J 6/16, B62J 39/00, B62K 23/00

(54) **Switch panel device in a saddle type vehicle**
Steuerpanel für Zweirad-Kraftfahrzeug
Panneau de commutation pour véhicule du type à selle

(30) Priority: 03.03.2000 JP 2000059389
(43) Date of publication of application: 05.09.2001
(73) Proprietor: HONDA GIKEN KOGYO KABUSHIKI KAISHA, Minato-ku, Tokyo (JP)
(72) Inventor: Ase, Yukimi, K. K. Honda Gijutsu Kenkyusho, Wako-shi, Saitama (JP); Kanaoka, Yoji, K. K. Honda Gijutsu Kenkyusho, Wako-shi, Saitama (JP); Shimamura, Koichi, K. K. Honda Gijutsu Kenkyusho, Wako-shi, Saitama (JP); Kano, Koji, K. K. Honda Gijutsu Kenkyusho, Wako-shi, Saitama (JP); Mochizuki, Yoshifumi, K. K.Honda Gijutsu Kenkyusho, Wako-shi, Saitama (JP)
(74) Representative: Liska, Horst

(56) References cited:
- DE-A- 2 932 238
- JP-U- 64 055 191
- US-A- 4 508 944
- US-A- 4 565 909
- US-A- 4 641 723
- PATENT ABSTRACTS OF JAPAN vol. 011, no. 302 (M-629), 2 October 1987 (1987-10-02) & JP 62 094447 A (YAMAHA MOTOR CO LTD), 30 April 1987 (1987-04-30)
- PATENT ABSTRACTS OF JAPAN vol. 2000, no. 04, 31 August 2000 (2000-08-31) & JP 2000 016366 A (ASAHI DENSO CO LTD), 18 January 2000 (2000-01-18)
- PATENT ABSTRACTS OF JAPAN vol. 014, no. 174 (M-0959), 5 April 1990 (1990-04-05) & JP 02 028076 A (YAMAHA MOTOR CO LTD), 30 January 1990 (1990-01-30)

## Description

The present invention relates to a switch panel device in a vehicle and particularly to a switch panel device mounted on a steering handle pipe and with plural switches concentrated thereon so as to permit a rider of the vehicle to operate the switches easily.

A vehicle having a switch panel device according to the preamble of claim 1 is known from US 4 565 909. Further switch panel devices for a motorcycle are known from DE 29 32 238 A and JP 62-094447 A.

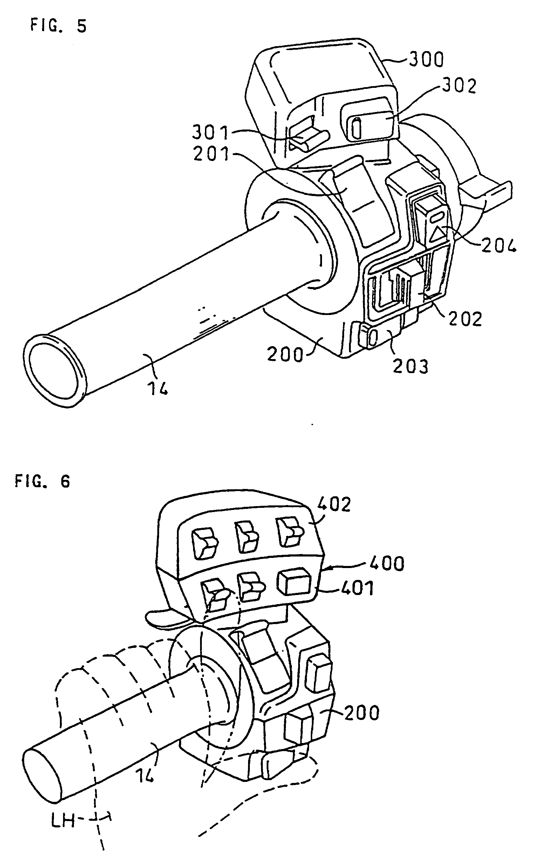

In a saddle type vehicle having a saddle which a rider straddles, such as a large-sized two-wheeled motor vehicle or a three-wheeled vehicle for leisure, operating switches are sometimes disposed on a steering handle pipe so that the rider can operate the switches easily. Fig. 5 is a perspective view showing an example of a conventional handle switch device. In the same figure, a switch body 200 is mounted on a steering handle pipe adjacent to a left handle grip 14. In the switch body 200 are provided indicating and warning switches such as a dimmer switch 201, a winker switch 202, a horn switch 203, and a hazard switch 204. Above the switch body 200 are disposed an audio switch unit 300 independently of the switch body. The audio switch unit 300 comprises a channel selecting switch 301 and a muting switch 302. Such a switch device is disclosed, for example, in Japanese Utility Model Laid-Open No. 7-19975.

Fig. 6 is a perspective view showing another example of a conventional handle switch device. In the same figure, a switch panel 400 is provided separately from a switch body 200, and an audio switch 401 and a switch 402 for CB radio communication (simply "for CB" hereinafter) are provided on the switch panel 400 to meet a demand for an increase in the number of switches.

As shown in Fig. 6, if switches are stacked upward with an increase in the number of switches, the operability of the top-stage switch will be deteriorated. More particularly, in a state in which the rider grasps the grip 14, a finger of the rider' s left hand LH is difficult to reach the switch 402 for CB located at the top stage. Moreover, the audio switch 401 and the switch 402 for CB are often used in shapes similar to each other because both include similar functions such as volume control. Therefore, in the example shown in Fig. 6 in which they are arranged side by side, it is not easy to distinguish one from the other, thus resulting in deterioration of operability.

It is an object of the present invention to provide a switch panel device in a vehicle capable of solving the above-mentioned problems, enhancing the degree of integration of switches, facilitating the recognition of many switches and thereby attaining the improvement of operability.

This object is achieved by a vehicle having a switch panel device according to claim 1.

A vehicle having a switch panel device, disposed near a steering handle grip of the vehicle and with a plurality of switch operating elements disposed on an operating surface, wherein the plural switch operating elements are arranged separately in plural vertical columns on the operating surface, and out of the plural switch operating elements, those for a vehicular indicating and warning system are allocated to a column closest to the steering handle grip and the other switch operating elements are allocated to the remaining column or columns.

According to thins feature of the invention, since switch operating element for an indicating and warning system, which require urgency and whose frequency of use is high, are allocated to the column closest to the handle grip, it is possible to effect urgent operations or frequent operations.

Since switch operating elements for the indicating and warning system, which require urgency and whose frequency of use is high, are allocated to the column closest to the handle grip, it is possible to easily perform a required motion in an emergency or perform frequent operations.

Furthermore, the plural switch operating elements are arranged separately in a total of four or more stages including a stage set on a horizontal line passing through a handle pipe to which the steering handle is to be connected and stages positioned above and below the stage, and out of the plural switch operating elements, those for a vehicular indicating and warning system are allocated to the stage set on a horizontal line passing through the handle pipe and also to stages adjacent above and below the stage, and the other switch operating elements are allocated to the remaining stage or stages.

According to this feature of the invention, when a vehicle driver is going to operate a switch operating element for the indicating and warning system, all that is required of a rider is merely extending his or her thumb horizontally while grasping the grip. By so doing, the rider's thumb will reach the switches concentrated at that horizontal position or thereabouts and thus it becomes possible for the rider to operate the switch operating element to be operated.

When the switch operating elements for the indicating and warning system are to be operated, all that is required is merely extending the rider's thumb horizontally while grasping the handle grip, whereby the rider's thumb can reach and operate the switch operating elements which are concentrated in that horizontal position.

Furthermore, the plural switch operating elements include switch operating elements for an indicating and warning system, an audio system and a radio communication system, which switch operating elements are arranged vertically in two or more columns and horizontally in three or more stages, and the switch operating elements for the audio system and the radio communication system are allocated to the column and stage remotest from the steering handle grip.

According to this feature of the invention, since the switch operating elements for the audio systems whose urgency and frequency of use are relatively low are allocated to a position remote from the handle grip, the switch operating elements for the indicating and warning system whose importance is high are allocated relatively to a position close to the handle grip. Therefore, even where a large number of switch operating elements are disposed, it is possible to utilize the operating surface of the switch panel and thereby ensure a satisfactory operability.

Since the switch operating elements for the audio system and radio communication system which are relatively low in urgency and frequency of use are allocated to a position remote from the handle grip, the switch operating elements for the indicating and warning system whose importance is high are allocated relatively to a position near the handle grip. Therefore, even where a large number of switch operating elements are arranged, it is possible to utilize the operating surface of the switch panel effectively and ensure a satisfactory operability.

An embodiment of the present invention will now be described with reference to the drawings.

It is illustrated in:
Fig. 1
   A perspective view of a left steering handle of a two-wheeled motor vehicle which includes a switch panel device according to an embodiment of the present invention.
Fig. 2
   A front view of the switch panel device.
Fig. 3
   A schematic diagram showing an arrangement of switch operating elements on the switch panel device.
Fig. 4
   A perspective view of the two-wheeled motor vehicle with the switch panel device of the embodiment mounted thereon.
Fig. 5
   A perspective view showing a conventional handle switch.
Fig. 6
   A perspective view showing another example of a conventional handle switch.

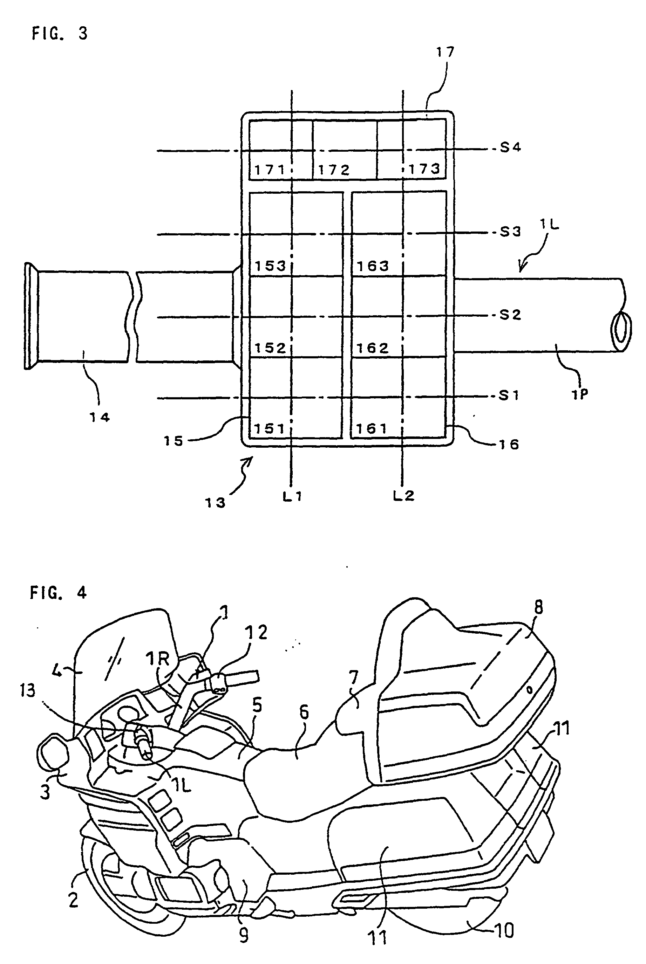

Fig. 4 is a perspective view of a two-wheeled motor vehicle with a switch panel device according to an embodiment of the present invention mounted thereon. In the same figure, a steering handle (simply "handle" hereinafter) 1 is fixed to an upper portion of a front fork (not shown) whose lower end journals a front wheel 2, and it is a separate type handle comprising a left handle 1L and a right handle 1R. In front of the handle 1 is mounted a front fairing 3 which covers a display panel and a lamp device, and a windscreen 4 is mounted on top of the front fairing 3.

Near the grip of the right handle 1R is disposed a right switch panel 12 which is provided with a starter, a reverse switch and a reverse shift switch. Near the grip of the left handle 1L is disposed a left switch panel 13 which includes a group of indicating and warning switches, a group of audio switches, and a group of switches for CB. The audio switches are for operating a radio, a CD player, and a tape deck. As to the left switch panel 13, a further description will be given later.

A fuel tank 5, a rider seat 6, a fellow passenger seat 7, and a rear box 8 are disposed in this order from the front fairing 3 toward the rear of the vehicle body. Below the fuel tank 5 is mounted an engine 9, while below the rear box 8 is positioned a rear wheel 10 and side boxes 11 are mounted so as to cover the right and left sides of an upper portion of the rear wheel 10.

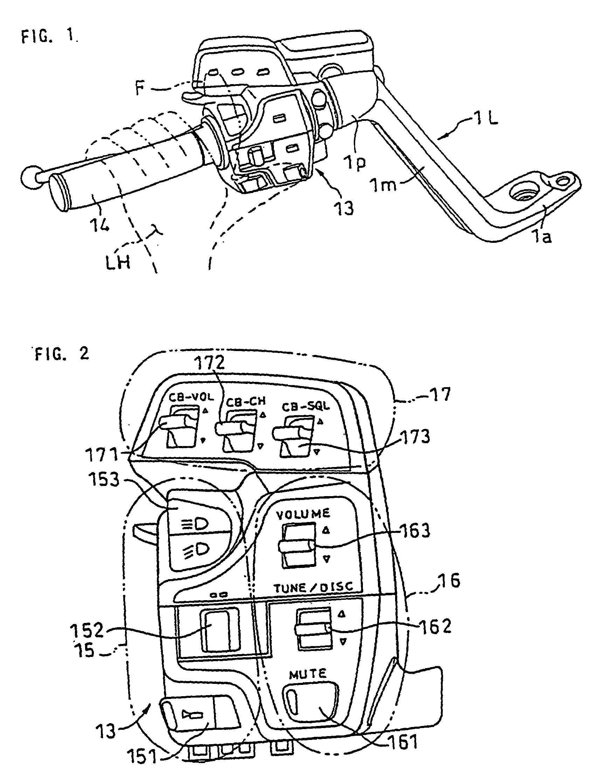

A detailed description will now be given about the left switch panel 13 mounted on the left handle 1L. Fig. 1 is a perspective view of the left handle which includes the left switch panel 13 and Fig. 2 is a front view of the left switch panel 13. In Fig. 1, the left handle 1L is made up of a mounting portion la fixed to a top bridge (not shown), an intermediate portion 1m extending obliquely leftwards from the mounting portion la, and a handle pipe portion 1p extending further leftwards and nearly horizontally from the intermediate portion 1m. A handle grip 14 is provided on a still left-hand side of the handle pipe portion 1p. The left switch panel 13 is disposed adjacent the handle grip 14 on the handle pipe portion 1p so that the rider can easily operate the left switch panel with his or her left hand LH while grasping the handle grip 14.

In Fig. 2, an indicating and warning switch group 15 is disposed on the front left side of the left switch panel 13, that is, in the column closest to the handle grip 14. The indicating and warning switch group 15 comprises a horn switch 151 positioned at the lowest stage, an overlying winker switch 152, and a still overlying dimmer switch 153. On the right side of the indicating and warning switch group 15, that is, in a column positioned away from the handle grip 14, is disposed an audio switch group 16. The audio switch group comprises a muting switch 161 positioned at the lowest stage, an overlying channel selecting switch 162, and a still overlying volume control 163.

Above the indicating and warning switch group 15 and the audio switch group 16 is further disposed a switch group 17 for CB. The CB switch group 17 comprises a CB volume control 171, a CB channel switch 172, and a CB squelch switch 173. As is seen from Fig. 1, an operating surface of the CB switch group 17 is in a position slightly turned clockwise in plan with respect to operating surfaces of the other switch groups 15 and 16, with an inclination given in the direction of the handle grip 14. This inclination facilitates an arcuate motion of a finger F when only the finger F is moved while the left hand LH is fixed to the grip handle 14. Fig. 3 is a schematic diagram for understanding the arrangement of switches on the left switch panel 13, in which the same reference numerals as in Fig. 2 represent the same portions. In Fig. 3, switches are roughly arranged vertically in two columns and horizontally in four stages, which are a column L1 close to the handle grip 14, a column L2 away from the handle grip 14, and stages S1, S2, S3, and S4. Of these stages, the stage S2 is set on a horizontal line passing through the handle pipe portion lp, and the other stage S1 and stages S3, S4 are set respectively below and above the stage S2.

The indicating and warning switch group 15 whose frequency of operation is high is disposed on the column L1 and the audio switch group 16 whose frequency of operation is presumed to be lower is disposed on the column L2. The CB switch group 17 is disposed on the stage S4. Further, the indicating and warning switch group 15 and the audio switch group 16 are disposed on the stages S1 and S3 below and above the stage S2.

Thus, the switches of the indicating and warning switch group 15 are concentrated near the handle grip 14. Therefore, when a quick motion is required, for example, when giving an indication at the time of frequent direction changing or giving a warning in an emergency, it is easy for the vehicle rider to extend his or her thumb and operate the switch concerned while grasping the handle grip 14.

Besides, since the switch groups 15 to 17 are each arranged in a horizontal row or vertical column, their switches can be identified easily. Particularly, since the audio switch group 16 is disposed vertically, while the CB switch group 17 is disposed horizontally, even when the respective switches are similar in shape, it is possible to easily distinguish between both switch groups, that is, malfunction is difficult to occur.

As will be apparent from the above description, since a plurality of switch operating elements are arranged separately in columns or stages, it is easy to distinguish them from one another and hence the operability is improved.

In summary it is intended to mount a large number of switches together on a handle pipe and improve operability.
To achieve this, plural switches are arranged on columns L1 and L2 or on stages S1 to S4 and an indicating and warning switch group 15 having high urgency and frequency of use is allocated to the column L1 which is located near a handle grip 14 and is also allocated to a stage S2 which is set on a horizontal line including a handle pipe 1 p and to stages S1 and S3 which are adjacent above and below the stage S2. Relatively, an audio switch group 16 and a switch group 17 for CB radio communication can be allocated to positions remote from the handle grip 14, thus resulting in that the degree of integration increases as a whole. Consequently, not only the switch panel surface can be utilized effectively, but also the operability is improved.

## Claims

1. A vehicle having a switch panel device, disposed near one of a pair of steering handle grips (13, 14) provided at the opposite left and right end portions of a steering handle bar (1) of the vehicle, said switch panel device being provided with a plurality of switch operating elements (15, 16, 17) disposed on an operating surface (13), said plural switch operating elements (15, 16, 17) are arranged separately in plural vertical columns (L1, L2) on said operating surface (13) each vertical column (L1, L2) comprising several switch operating elements (15, 16, 17) **characterized in that**:
out of said plural switch operating elements (15, 16, 17), those (15) for activating a vehicular indicating and warning system are allocated to a column (L1) closest to said steering handle grip (14) and the other switch operating elements (16, 17) are allocated to the remaining column (L2) or columns.

2. A vehicle having a switch panel device according to claim 1, **characterized in that**:
said plural switch operating elements (15, 16, 17) are also arranged separately in a total of four or more rows (S1-S4) including a row (S2)set on a horizontal line passing through a handle pipe (1p) to which the steering handle grip (14) is to be connected and stages (S1, S3, S4) positioned above and below said stage (S2); and
out of said plural switch operating elements (15, 16, 17), those (15) for a vehicular indicating and warning system are allocated to said stage (S2) set on a horizontal line passing through the handle pipe and also to stages (S1, S3) adjacent above and below said stage (S2), and the other switch operating elements (16, 17) are allocated to the remaining stage (S4) or stages.

3. A vehicle having a switch panel device according to claim 1 or 2, **characterized in that**:
said plural switch operating elements (15, 16, 17) include switch operating elements (15, 16, 17) for an indicating and warning system, an audio system and a radio communication system, which switch operating elements (15, 16, 17) are arranged vertically in two or more columns (L1, L2) and horizontally in three or more stages (S1-S4); and
the switch operating elements (16, 17) for the audio system and the radio communication system are allocated to the column (L2) and stage (S4) remotest from said steering handle grip (14).

4. A vehicle having a switch panel device according to any one of claims 1 to 3, **characterized in that**:
said plural switch operating elements (15, 16, 17) include a plurality of indicating and warning switches (151, 152, 153) and are arranged separately in a plurality of vertical columns (L1, L2) on said operating surface (13) such that a winker switch (152) and a horn switch (151) out of said indicating and warning switches are allocated to one of the columns (L1) which is closest to one of said handle grips (14).

5. A vehicle having switch panel device according to claim 4, **characterized in that**:
said horn switch (151) is arranged below a horizontal line (52) which passes said handle grip (14).

## Patentansprüche

1. Fahrzeug mit einer Bedienungsfeld-Einrichtung, welche nahe einem eines Paars von Lenkergriffen (13, 14) angeordnet ist, welche an den entgegengesetzten linken und rechten Endabschnitten einer Lenkstange (1) des Fahrzeugs vorgesehen sind, wobei die Bedienungsfeld-Einrichtung mit einer Mehrzahl von Schaltbetätigungselementen (15, 16, 17) versehen ist, welche auf einer Bedienungsoberfläche (13) angeordnet sind, wobei die mehreren Schaltbetätigungselemente (15, 16, 17) getrennt in mehreren vertikalen Spalten (L1, L2) auf der Bedienungsoberfläche (13) angeordnet sind, wobei jede vertikale Spalte (L1, L2) mehrere Schaltbetätigungselemente (15, 16, 17) umfasst,
**dadurch gekennzeichnet, dass**:
aus den mehreren Schaltbetätigungselementen (15, 16, 17) jene (15) zur Aktivierung eines Fahrzeug-Anzeige- und Warnsystems einer Spalte (L1) zugewiesen sind, welche dem Lenkergriff (14) am Nächsten ist, und die anderen Schaltbetätigungselemente (16, 17) der übrigen Spalte (L2) oder den übrigen Spalten zugewiesen sind.

2. Fahrzeug mit einer Bedienungsfeld-Einrichtung gemäß Anspruch 1, **dadurch gekennzeichnet, dass**:
die mehreren Schaltbetätigungselemente (15, 16, 17) auch getrennt in insgesamt vier oder mehr Reihen (S1-S4) angeordnet sind, einschließlich einer Reihe (S2), welche auf eine horizontale Linie gesetzt ist, welche durch ein Lenkerrohr (1 p) verläuft, an welchem der Lenkergriff (14) anzubringen ist, und Stufen (S1, S3, S4), welche über und unter der Stufe (S2) angeordnet sind; und
aus den mehreren Schaltbetätigungselementen (15, 16, 17) jene (15) für ein Fahrzeug-Anzeige- und Warnsystem der Stufe (S2) zugewiesen sind, welche auf eine durch das Lenkerrohr (1 p) verlaufende horizontale Linie gesetzt ist, und auch Stufen (S1, S3) zugewiesen sind, welche der Stufe (S2) oberhalb und unterhalb benachbart sind, und wobei die anderen Schaltbetätigungselemente (16, 17) der übrigen Stufe (S4) oder den übrigen Stufen zugewiesen sind.

3. Fahrzeug mit einer Bedienungsfeld-Einrichtung gemäß Anspruch 1 oder 2, **dadurch gekennzeichnet, dass**:
die mehreren Schaltbetätigungselemente (15, 16, 17) Schaltbetätigungselemente (15, 16, 17) für ein Anzeige- und Warnsystem, ein Audiosystem und ein Funkkommunikationssystem umfassen, welche Schaltbetätigungselemente (15, 16, 17) vertikal in zwei oder mehr Spalten (L1, L2) und horizontal in drei oder mehr Stufen (S1-S4) angeordnet sind; und
die Schaltbetätigungselemente (16, 17) für das Audiosystem und das Funkkommunikationssystem der Spalte (L2) und der Stufe (S4) zugewiesen sind, welche von dem Lenkergriff (14) am weitesten entfernt ist.

4. Fahrzeug mit einer Bedienungsfeld-Einrichtung gemäß einem der Ansprüche 1 bis 3, **dadurch gekennzeichnet, dass**:
die mehreren Schaltbetätigungselemente (15, 16, 17) eine Mehrzahl von Anzeige- und Warnschaltern (151, 152, 153) umfassen und getrennt in einer Mehrzahl von vertikalen Spalten (L1, L2) auf der Bedienungsoberfläche (13) derart angeordnet sind, dass ein Blinkerschalter (152) und ein Hupenschalter (151) von den Anzeige- und Warnschaltern einer der Spalten (L1) zugewiesen ist, welche einem der Lenkergriffen (14) am nächsten ist.

5. Fahrzeug mit einer Bedienungsfeld-Einrichtung gemäß Anspruch 4, **dadurch gekennzeichnet, dass**:
der Hupenschalter (151) unter einer horizontalen Linie (52) angeordnet ist, welche durch den Lenkergriff (14) verläuft.

## Revendications

1. Véhicule ayant un dispositif de panneau de commande, disposé à proximité de l'une d'une paire de poignées de guidon de direction (13, 14) disposées au niveau des parties d'extrémité gauche et droite opposées d'un guidon de direction (1) du véhicule, ledit dispositif de panneau de commande étant pourvu d'une pluralité d'éléments de commande de commutation (15, 16, 17) disposés sur une surface de commande (13), lesdits éléments de commande de commutation multiples (15, 16, 17) étant agencés séparément dans une pluralité de colonnes verticales (L1, L2) sur ladite surface de commande (13), chaque colonne verticale (L1, L2) comprenant plusieurs éléments de commande de commutation (15, 16, 17), **caractérisé en ce que** :
parmi ladite pluralité d'éléments de commande de commutation (15, 16, 17), ceux (15) qui sont destinés à l'activation d'un système d'indication et d'avertissement de véhicule sont assignés à la colonne (L1) la plus proche de ladite poignée de guidon de direction (14) et les autres éléments de commande de commutation (16, 17) sont assignés à la colonne (L2) ou aux colonnes restantes.

2. Véhicule ayant un dispositif de panneau de commande selon la revendication 1, **caractérisé en ce que** :
ladite pluralité d'éléments de commande de commutation (15, 16, 17) sont agencés séparément dans une totalité de quatre lignes ou plus (S1 à S4) comprenant une ligne (S2) disposée sur une ligne horizontale passant par un tube de guidon (1p) auquel la poignée de guidon de direction (14) est destinée à être raccordée et des étages (S1, S3, S4) positionnés au-dessus et au-dessous dudit étage (S2) ; et
parmi ladite pluralité d'éléments de commande de commutation (15, 16, 17), ceux (15) qui sont destinés à l'activation d'un système d'indication et d'avertissement de véhicule sont assignés audit étage (S2) disposé sur une ligne horizontale passant par le tube de guidon ainsi qu'aux étages (S1, S3) adjacents au-dessus et au-dessous dudit étage (S2), et les autres éléments de commande de commutation (16, 17) sont assignés à l'étage (S4) ou les étages restants.

3. Véhicule ayant un dispositif de panneau de commande selon la revendication 1 ou 2, **caractérisé en ce que** :
ladite pluralité d'éléments de commande de commutation (15, 16, 17) comprend des éléments de commande de commutation (15, 16, 17) pour un système d'indication et d'avertissement, un système audio et un système de radiocommunication, lesdits éléments de commande de commutation (15, 16, 17) étant agencés verticalement dans deux colonnes ou plus (L1, L2) et horizontalement dans trois étages ou plus (S1 à S4) ; et
les éléments de commande de commutation (16, 17) pour le système audio et le système de radiocommunication sont assignés à la colonne (L2) et l'étage (S4) les plus distants de ladite poignée de guidon de direction (14).

4. Véhicule ayant un dispositif de panneau de commande selon l'une quelconque des revendications 1 à 3, **caractérisé en ce que** :
ladite pluralité d'éléments de commande de commutation (15, 16, 17) comprennent une pluralité de commutateurs d'indication et d'avertissement (151, 152, 153) et sont agencés séparément dans une pluralité de colonnes verticales (L1, L2) sur ladite surface de commande (13) de sorte qu'un commutateur clignotant (152) et un commutateur avertisseur (151) parmi lesdits commutateurs d'indication et d'avertissement soient assignés à l'une des colonnes (L1) qui est la plus proche de l'une desdites poignées de guidon (14).

5. Véhicule comprenant un dispositif de panneau de commande selon la revendication 4, **caractérisé en ce que** :
ledit commutateur avertisseur (151) est agencé au-dessous d'une ligne horizontale (52) qui passe par ladite poignée de guidon (14).
